# EUROPÄISCHE PATENTSCHRIFT

(11) **EP 3 990 995 B1**
(45) Veröffentlichungstag und Bekanntmachung des Hinweises auf die Patenterteilung: **31.07.2024**
(21) Anmeldenummer: 20743060.4
(22) Anmeldetag: 22.06.2020
(51) Int. Cl.: G05B 19/409, G05B 19/418

(54) **PRODUKTIONSMASCHINE MIT STEUERUNGSPROGRAMM**
PRODUCTION MACHINE COMPRISING A CONTROL PROGRAMME
MACHINE DE PRODUCTION À PROGRAMME DE COMMANDE

(30) Priorität: 25.06.2019 DE 102019117092
(43) Veröffentlichungstag der Anmeldung: 04.05.2022
(73) Patentinhaber: KIEFEL GmbH, 83395 Freilassing (DE)
(72) Erfinder: LANG, Christian, 5120 Haigermoos (AT); SCHÖRGHOFER, Michael, 5422 Bad Dürrnberg (AT); KNOLL, Peter, 83404 Ainring (DE); AINZ, Andreas, 5325 Plainfeld (AT); HRADETZ, Horst, 83404 Ainring/Mitterfelden (DE)
(74) Vertreter: DTS Patent- und Rechtsanwälte PartmbB
(86) Internationale Anmeldenummer: PCT/DE2020/000138
(87) Internationale Veröffentlichungsnummer: WO 2020/259730

(56) Entgegenhaltungen:
- US-A- 5 470 218
- US-A1- 2008 228 315
- US-B2- 9 165 096

## Beschreibung

### Gebiet der Erfindung

Die Erfindung betrifft eine Produktionsmaschine mit einem Steuerungsprogramm zur Visualisierung von Maschinenkomponenten und einem Verfahren zum Optimieren von Prozessparametern für eine Produktionsmaschine mit einem solchen Steuerungsprogramm sowie einem Datenträger mit einem solchen Steuerungsprogramm.

### Hintergrund der Erfindung

Produktionsmaschinen mit mehreren Maschinekomponenten werden in vielen Bereichen der Fertigung eingesetzt. In der Kunststoffverarbeitung werden beispielweise Blasformmaschinen und Thermoformmaschinen verwendet. Bei Thermoformmaschinen nach dem Stand der Technik, die verschiedene Bauformen von Werkzeugen zur Produktion verschieden gestalteter Formteile aufnehmen können, müssen für die unterschiedlichen Formteile unterschiedliche Formprogramm für die Produktion verwendet werden. Die unterschiedlichen Formteile benötigen für eine qualitativ gute Fertigung in der Regel unterschiedliche Prozessparametersätze, die in die Formprogramme eingegeben werden müssen. Hierbei kann es notwendig sein, selbst einem für das Formteil bekannten Prozessparametersatz auf die jeweilige Produktions- und Maschinensituation erneut anzupassen. Wenn der Bediener während des Optimierens des Fertigungsprozesses Maschinenparameter ändert, wäre es wünschenswert, dass eine Visualisierung den prinzipiellen zeitlichen Ablauf in der Maschine anzeigen würde, damit der Bediener weniger Mühe hat, die Auswirkungen seines Handelns in den aktuellen zeitlichen Ablauf der Maschine einzuordnen.

Im Stand der Technik gibt es Steuerungsprogramme, die neben den Eingabefeldern eine schematische Darstellung von einzelnen Maschinenkomponenten zeigen, um den betreffenden Prozessschritt dem Bediener besser darzustellen. Beispielsweise offenbart die US 5,470,218 A eine Spritzformanlage, bei der ein Bediener auf einem oder mehreren Monitoren prozessrelevante Parameter variieren kann und den zeitlichen Verlauf der Parameterwerte im Spritzformprozess am Monitor visualisiert dargestellt bekommt.

Manchmal sind diese Maschinendarstellungen durch Verfahrkurven der Maschinenkomponenten ergänzt. Allerdings kann der Bediener aus dieser Darstellung alleine keinen optimalen Prozessparametersatz ableiten, sondern muss zusätzlich auf seine Erfahrung zurückgreifen.

Es wäre daher wünschenswert, die Optimierung des Prozessparametersatzes auf eine objektivere Basis zu stellen und eine Prozessvisualisierung dem Benutzer zur Verfügung zu stellen, mit der er unabhängig von seiner Erfahren schneller zu einem für die Produktion optimaleren Prozessparametersatz gelangen kann.

### Zusammenfassung der Erfindung

Der Erfindung liegt die Aufgabe zugrunde, ein Steuerungsprogramm für Produktionsmaschinen zur Verfügung zu stellen, mit denen die Optimierung des Prozessparametersatzes von einer objektiveren Basis aus erfolgen kann und eine Prozessvisualisierung dem Benutzer zur Verfügung gestellt wird, mit der er unabhängig von seiner Erfahrung schneller zu einem für die Produktion optimaleren Prozessparametersatz gelangen kann.

Die Aufgabe der Erfindung wird gelöst durch eine Produktionsmaschine zur Kunststoffverarbeitung umfassend mehrere Maschinenkomponenten und eine Maschinensteuerung zur Steuerung der Produktionsmaschine umfassend ein Steuerungsprogramm mit einer als Visualisierungseinrichtung ausgebildeten interaktiven Benutzerschnittstelle, wobei das Steuerungsprogramm dazu ausgestaltet ist, auf der Visualisierungseinrichtung zumindest eine, vorzugsweise alle, der Maschinenkomponenten in ihrer Funktion bei der Produktion in jeweils einer Darstellung für jede dieser Maschinenkomponenten zu visualisieren und entsprechende Schaltfelder zur Eingabe von Prozessparametern in Bezug auf die jeweils visualisierte Maschinenkomponente bereitzustellen, wobei die Darstellung zumindest ein Parameter-Zeit-Diagramm mit Bewegungskurven von ein oder mehreren Bestandteilen der jeweilige Maschinenkomponente umfasst, wobei zumindest eine der Bewegungskurven in unterschiedliche geeignet visualisierte Bewegungsabschnitte unterteilt ist, für die jeweils der für diesen Bewegungsabschnitt prozessbestimmende Prozessparameter visualisiert ist, der über die bereitgestellten Schaltfelder variierbar ist.

Produktionsmaschinen für die Kunststoffverarbeitung sind beispielsweise Blasformmaschinen oder Thermoformmaschinen. Blasformmaschinen stellen einen Folienschlauch aus erwärmtem Kunststoffmaterial her. Thermoformmaschinen werden zur Produktion von tiefgezogenen Formteilen umfassend eine Transporteinrichtung für eine thermoplastische Folienbahn und eine Formstation zum Formen der Formteile aus der zuvor erwärmten Folienbahn verwendet. Solche Maschinen zeichnen sich dadurch aus, dass sie eine Vielzahl an einzelnen Maschinenkomponenten umfassend, die geeignet zusammenwirken müssen, da ein einziger Folienschlauch bzw. eine einzige Folienbahn durch die gesamte Produktionsanlage hindurchgeführt wird und somit die Maschinenkomponenten für einen guten Gesamtprozess in ihrer Wirkung und Taktzeit aufeinander abgestimmt werden müssen. Maschinenkomponenten für eine Thermoformmaschine umfassen beispielsweise die Transportvorrichtung für Folienversorgung von einer Folienrolle, eine Vorheizstation zum Vorheizen der Folienbahn, eine Heizstation zum Heizen der Folienbahn auf Prozesstemperatur, eine Formstation zum Formen des Produktes aus der Folienbahn, eine Schneidestation zur Herausschneiden der geformten Produkte aus der Folienbahn, eine Stapelstation zur Stapelung der fertigen Produkte und eine Verwertungsstation für die nicht verarbeitete Folienbahn.

Die Maschinensteuerung kann dabei an der Produktionsmaschine oder separat von der Produktionsmaschine angeordnet sein, wobei die Maschinensteuerung über geeignete Datenleitungen mit den jeweiligen Maschinenkomponenten so verbunden ist, dass die Eingaben der Prozessparameter in entsprechende Maschineneinstellungen umgesetzt werden können. Die Maschinesteuerung umfasst außerdem einen Prozessor, auf dem das Steuerungsprogramm installiert und ausgeführt werden kann sowie einen Datenspeicher zur Speicherung von Prozessparameter oder ist zumindest mit einem solchen Speicher verbunden. Die Datenleitungen können dabei als Datenkabel oder drahtlos ausgeführt sein. Die Maschinesteuerung kann beispielsweise auch als Cloudlösung implementiert sein, die über ein WLAN oder eine Internetverbindung mit der Produktionsmaschine verbunden ist.

Die Visualisierungseinrichtung kann jede dafür geeignete Einrichtung sein, beispielsweise ein berührungsempfindlicher Bildschirm. Über die Visualisierungseinrichtung erhält der Bediener mit Hilfe des Steuerungsprogramms eine Prozessvisualisierung, mit der er unabhängig von seiner Erfahren schneller zu einem für die Produktion optimaleren Prozessparametersatz gelangen kann. Der Prozessparametersatz bezeichnet dabei die Prozesseinstellungen, die vorgenommen werden müssen, um eine Produktion auf der Produktionsmaschine durchführen zu können. Die einzelnen Prozessparametersätze können dabei als Rezepte für die Produktion bestimmter Produkte in der Maschinensteuerung oder auf einem externen Speichermedium gespeichert werden und in das Steuerungsprogramm geladen werden. Die Schaltfelder können als Software-Felder zur Eingabe von Parametern über die Visualisierungseinrichtung dem Bediener angeboten werden.

Als Parameter-Zeit-Diagramm wird eine zweidimensionale Darstellung in einem xy-Diagramm bezeichnet, wobei üblicherweise die Zeit über die waagerechte Koordinate und der dazu korrelierte Parameter, beispielsweise ein Weg oder eine Wegstrecke, über die dazu senkrechte Koordinate angezeigt wird. Im Falle eines Wegs oder einer Wegstrecke wird das Parameter-Zeit-Diagramm als Weg-Zeit-Diagramm bezeichnet. Die in dem Parameter-Zeit-Diagramm dargestellten Bewegungskurven stellen die jeweiligen Bewegungen der Bestandteile der jeweiligen Maschinenkomponente über einen Parameter als Funktion der Zeit dar. Der Begriff "Bewegungskurven" verdeutlicht lediglich, dass der Parameter die Bewegung der Bestandteile charakterisiert. Der Parameter muss dabei nicht zwingend der Weg oder die Wegstrecke sein, den die Bestandteile bei der Bewegung überwinden. In einer Ausführungsform ist allerdings das Parameter-Zeit-Diagramm ein Weg-Zeit-Diagramm, da sich Bewegungen gut als Positionsänderung über die Zeit und somit als Weg oder Wegstrecke über die Zeit darstellen lassen. Als Bestandteile der Maschinenkomponenten werden Subkomponenten der Maschinenkomponenten bezeichnet. Beispielsweise umfasst bei einer Thermoformmaschine als die Produktionsmaschine die Maschinenkomponente "Formstation" als Bestandteile ein Oberwerkzeug und ein Unterwerkzeug, zwischen denen die Folienbahn für den Formprozess eingespannt wird und gegebenenfalls Vordehnstempel, die die Folie beim Formprozess vordehnen. Da Bewegungen der Bestandteile und damit die Bewegungskurven beispielweise eine Beschleunigungsstrecke, eine Strecke mit konstanter Geschwindigkeit und eine Abbremsstrecke umfassen, können diese Strecken in unterschiedliche Bewegungsabschnitte der Bewegungskurve eingeteilt werden, die zur besseren Übersicht unterschiedlich visualisiert werden. Über die Visualisierung des prozessbestimmenden Parameters auf den einzelnen Bewegungsabschnitten kann der Bediener gezielt die Prozessparameter anpassen, die den größten Einfluss auf die Bewegungskurve in diesem Bewegungsabschnitt haben, sodass beispielweise die Prozesszeit für diese Maschinenposition verkürzt werden kann, falls diese Maschinenkomponente die Gesamtprozesszeit auf der Produktionsmaschine bestimmt. Insbesondere werden Prozesseinstellungen mittels dieser durch das Steuerungsprogramm bereitgestellten visualisierten Eingabeführung vermieden, die keinen wesentlichen oder gar einen falschen Einfluss auf den Prozess, seine Qualität und/oder seine Geschwindigkeit haben.

Die geeignete Visualisierung der Bewegungsabschnitte kann dabei unterschiedlich ausgeführt sein, beispielsweise über ein Hinzufügen des prozessbestimmenden Parameters an oder in den jeweiligen Bewegungsabschnitt, beispielsweise als Symbol oder Nummer der entsprechenden Schaltfeldes zur Eingabe dieses Parameters oder im Klartext beziehungsweise durch Herausstellen (sogenanntes "High-lighten") der Bewegungsabschnitte, beispielsweise bei als Linien im Parameter-Zeit-Diagramm auf der Visualisierungseinrichtung dargestellte Bewegungskurven über eine unterschiedliche Dicken der Linien, unterschiedliche Helligkeit der Linien, unterschiedliche Linienform oder Linienformat, unterschiedliche Farbe, unterschiedliches Blinkmuster der Linien, unterschiedliche Farbe oder Markierung der Fläche unter den Linien etc. oder eine Kombination aus zwei oder mehr der voranstehenden Möglichkeiten in den unterschiedlichen Bewegungsabschnitten.

Mit der vorliegenden Erfindung wird somit eine Produktionsmaschine bzw. ein Steuerungsprogramm für die Produktionsmaschinen zur Verfügung gestellt, mit der die Optimierung des Prozessparametersatzes von einer objektiveren Basis aus erfolgen kann und dem Benutzer eine Prozessvisualisierung zur Verfügung gestellt, mit der er unabhängig von seiner Erfahrung schneller zu einem für die Produktion optimaleren Prozessparametersatz gelangen kann.

In einer Ausführungsform sind alle Bewegungskurven des Parameter-Zeit-Diagramms in unterschiedliche geeignet visualisierte Bewegungsabschnitte unterteilt. Somit erhält der Bediener für alle den Bewegungskurven entsprechenden Bestandteile der jeweiligen Maschinenkomponente die Detailinformation, welche Prozessparameter zu welchem Bewegungszeitpunkt bzw. Bewegungsbereich prozessbestimmend sind und kann daher schneller für alle dargestellten Bestandteile den Prozessparametersatz auf die gewünschte Wirkweise optimieren, ohne sich dabei in der Modifikation von weniger wichtigen Prozessparametern zu verirren oder sich bei der Einstellung der zwar richtigen Prozessparameter auf eine dem Prozess nicht zuträgliche Einstellung hinzubewegen.

In einer weiteren Ausführungsform besitzen die Bewegungsabschnitte eine von den über die Schaltfelder eingegebenen Prozessparameter abhängige Länge, wobei das Steuerungsprogramm die Länge der Bewegungsabschnitte und den jeweils visualisierten prozessbestimmenden Prozessparameter an die jeweiligen Eingaben anpasst. Beispielsweise können die Einstellungen für Prozessparameter wie beispielsweise Endgeschwindigkeit und Beschleunigung bei der Bewegung der Ober- und Unterwerkzeuge in der Formstation dazu führen, dass die Bewegungsabschnitte, die vormals von der Endgeschwindigkeit dominiert waren, bei einer bestimmten gewählten Beschleunigung verschwinden. Beispielweise könnte bei einer fixen Verfahrstrecke gegeben durch die maximalen Fahrwege in der Formstation eine gewählte geringe Beschleunigung bei vorgegebener hoher Endgeschwindigkeit dazu führen, dass der Bewegungsabschnitt mit führender Endgeschwindigkeit verschwindet, weil über den verfügbaren Verfahrweg bei gewählter geringer Beschleunigung die Endgeschwindigkeit überhaupt nicht erreicht wird. Diese Verhältnisse wären ohne die erfindungsgemäße Visualisierung anhand der geeignet unterschiedlich visualisierten Bewegungsabschnitt für den Bediener an den bloßen Bewegungskurven nicht erkennbar. Dadurch, dass der Bewegungsabschnitt mit dominierender Endgeschwindigkeit in diesem Beispiel verschwindet und der Bewegungsabschnitt mit dominierender Beschleunigung in seiner Länge so wächst, dass er den gesamten Verfahrweg ausfüllt, ist für den Bediener die durch das Steuerungsprogramm bereitgestellte Anweisung, die Eingabewerte für Beschleunigung und Endgeschwindigkeit entsprechend zu modifizieren, hier beispielsweise die Beschleunigungswerte so zu erhöhen, dass wieder ein Bewegungsabschnitt mit einer bestimmten Länge in der Bewegungskurve existiert, der von der Endgeschwindigkeit dominiert wird. Dadurch lassen sich auch die Taktzeiten der Maschinekomponente verkürzen, da der Bediener nun angezeigt bekommt, welche Prozessparameter die richtigen Prozessparameter für eine Manipulation sind.

In einer weiteren Ausführungsform sind die Bewegungskurven mittels unterschiedlicher Farben in die unterschiedlichen Bewegungsabschnitte unterteilt. Über unterschiedliche Farben lässt sich sehr instruktiv unterschiedliche Bewegungsabschnitte anzeigen. Unterschiedliche Farben vermeiden besonders gut die Verwechselung oder das Übersehen von kleineren Bewegungsabschnitten auf der Bewegungskurve. Für die Indikation können bei angrenzenden Bewegungsabschnitten beispielsweise Komplementärfarben zu besonders guten Unterscheidbarkeit benachbarter Bewegungsabschnitte verwendet werden.

In einer weiteren Ausführungsform sind die Schaltfelder der jeweils prozessbestimmenden Prozessparameter mit denselben Farben wie die entsprechenden Bewegungsabschnitte, wo diese Prozessparameter prozessbestimmend sind, indiziert. Dadurch wird dem Bediener sehr eindrücklich angezeigt, welchen Prozessparameter er zu ändern hat, um die Bewegungskurve zu beeinflussen und über welches Schaltfeld er dies tun kann. Dies vermeidet ein Verwechseln der Schaltfelder für Einstellung des gewünschten Prozessparameters, selbst wenn der Bediener erkannt hat, welchen Prozessparameter er zu ändern hat. Somit werden Fehleingabe in das Steuerungsprogramm vermieden. Die Indizierung der Schaltfelder mit der gleichen Farbe wie die Bewegungsabschnitte der Bewegungskurven kann beispielsweise dadurch erfolgen, dass die entsprechenden Schaltfelder ein einer Seite mit einem farbigen Balken indiziert werden, von einem farbigen Rahmen eingehüllt werden oder mit der entsprechenden Farbe teilweise oder vollständig unterlegt werden.

In einer weiteren Ausführungsform wird bei Eingabe des prozessbestimmenden Prozessparameters über die entsprechende Schaltfeld der entsprechende Bewegungsabschnitt auf der Bewegungskurve hervorgehoben. Diese durch das Steuerungsprogramm bereitgestellte Visualisierung der Eingabe ermöglicht dem Bediener eine sofortige Kontrolle, ob er mit dem gewählten Schalfeld tatsächlich den gewünschten Bewegungsabschnitt modifiziert oder irrtümlicherweise einen anderen Bewegungsabschnitt manipuliert. Dadurch wird die Optimierung der Prozessparameter beschleunigt und bedienungssicherer gemacht. Das Hervorheben des Bewegungsabschnitts kann beispielsweise durch eine erhöhte Helligkeit oder eine verbreiterte Linienstärke in diesem Bereich der Bewegungskurve erfolgen.

In einer weiteren Ausführungsform ist dabei die Darstellung als Mehrfachdarstellung ausgeführt, die zusätzlich zum Parameter-Zeit-Diagramm eine zu den Bewegungskurven korrelierte Abbildung der Bestandteile dieser Maschinenkomponente umfasst. Durch die Zusatzinformation durch Visualisieren des tatsächlichen Bewegungsablaufs der Bestandteile, die bereits als Bewegungskurven visualisiert sind, erhält der Bediener eine wichtige Zusatzinformation, die er ergänzend zu den Informationen aus dem Parameter-Zeit-Diagramm. Hier kann beispielsweise bei einer Formstation das Zusammenfahren und teilweise Eintauchen des Oberwerkzeugs in das Unterwerkzeug mittels einer Abbildung sehr plastisch kontrolliert werden, was aus dem zweidimensionalen Parameter-Zeit-Diagramm eventuell nicht so klar hervorgeht. Zudem erhält der Bediener über die Abbildung der Maschinenkomponente einen direkten Hinweis, welcher Prozess für ihn gerade Visualisiert wird.

In einer weiteren Ausführungsform ist die Abbildung der Bestandteile der Maschinenkomponente eine perspektivisch dreidimensionale Abbildung der Bestandteil. Durch die perspektivische Ansicht erhält der Bediener einen plastischen Eindruck von der Maschinekomponente. Die perspektivische Ansicht erlaub das Darstellen von komplexeren Anordnungen der Bestandteile, von denen manche eventuell in einer rein zweidimensionalen Darstellung von vordergründigen Bestandteilen verdeckt sein könnten.

In einer weiteren Ausführungsform werden in der Abbildung der Bestandteile der Maschinenkomponente nur die Bestandteile gezeigt, die sich gemäß den Bewegungskurven im Parameter-Zeit-Diagramm bewegen. Das vereinfacht die Korrelation der Bewegungskurven zur Abbildung, die dadurch übersichtlicher für den Bediener wird. Außerdem besitzen stehende Bestandteile keine Bewegungskurven, sodass die alleinige Abbildung von sich bewegenden Bestandteilen auf der Visualisierungsanzeige eine Falschinterpretation seitens des Bediener vermeidet.

In einer weiteren Ausführungsform ist die Abbildung der Bestandteile der Maschinenkomponente durch das Steuerungsprogramm direkt angrenzend an das Parameter-Zeit-Diagramm auf der Visualisierungseinrichtung angeordnet. Das erhöht die Übersichtlichkeit der visualisierten Maschinekomponente und erleichtert eine direkte Korrelation von Bewegungskurven zu abgebildeten Bestandteilen der Maschinenkomponente.

In einer weiteren Ausführungsform sind die Schaltfelder zur Eingabe von Prozessparametern, die Einfluss auf eine bestimmte Bewegungskurve haben, durch das Steuerungsprogramm separat von den anderen Schaltfelder mit Einfluss auf die anderen Bewegungskurven auf der Visualisierungseinrichtung durch das Steuerungsprogramm angeordnet. Dadurch werden Fehleingaben aufgrund ähnlicher Indizierung der Schaltfelder unterschiedlicher Bewegungskurven vermieden. Werden beispielsweise bestimmte Bewegungsabschnitte der Bewegungskurve 1 in grün visualisiert und anderen Bewegungsabschnitts in Bewegungskurve ebenfalls in grün oder einer ähnlicher Farbe visualisiert und enthalten die entsprechenden Schaltfelder eine entsprechend gleiche grüne Indikation, so könnte der Bediener bei fehlender räumlicher Trennung der Schaltfelder für Bewegungskurve 1 und 2 die Eingabe, die für den Bewegungsabschnitt der Bewegungskurve 1 gedacht sind in die Schaltfelder der Bewegungskurve 2 eingeben. Eine solche Fehlbedienung wird durch die voneinander separierte Anordnung der Schaltfelder auf der Visualisierungseinrichtung vermieden.

In einer weiteren Ausführungsform sind die Schaltfelder mit Einfluss auf bestimmte Bewegungskurven in einem oder mehreren Bereichen auf der Visualisierungseinrichtung horizontal neben dem Parameter-Zeit-Diagramm angeordnet, während Schaltfelder mit allgemeinen Einfluss auf die Bewegungskurven auf der Visualisierungseinrichtung oberhalb und/oder unterhalb des Parameter-Zeit-Diagramms angeordnet sind. Dadurch wird die Bedienung intuitiv weiter verbessert, insbesondere durch die räumliche Trennung zwischen allgemein wirkenden Parametereingaben und Schaltfelder mit direktem Einfluss auf eine bestimmte Bewegungskurve.

In einer weiteren Ausführungsform stellt das Steuerungsprogramm für jede visualisierte Maschinenkomponente eine separate Visualisierungsseite auf der Visualisierungseinrichtung bereit, wobei geeignete Schaltfelder zum Wechsel zwischen einzelnen Visualisierungsseiten bereitgestellt werden. Dies erleichtert die Übersichtlichkeit der Darstellung auf der Visualisierungsanzeige und verringert damit das Risiko von Fehleingaben.

In einer weiteren Ausführungsform ermöglicht das Steuerungsprogramm ein Durchfahren der Bewegungskurven des Parameter-Zeit-Diagramms auf der Visualisierungseinrichtung, wobei das Durchfahren korreliert ist mit der entsprechend bewegten Abbildung der Bestandteile der Maschinenkomponente in ihren jeweiligen Positionen zu jedem Zeitpunkt im Parameter-Zeit-Diagramm. Der animierte Ablauf der Bewegungen der Bestandteile der dargestellten Maschinenkomponente stellt dem Bediener eine sehr gute Kontrollmöglichkeit zur Verfügung, mit der er sich vergewissern kann, ob die Prozessparameter gut eingestellt sind. Der gezeigte Ablauf in der jeweiligen Maschinenkomponente bietet weitere Einsicht in den Prozessablauf zusätzlich zu der Angabe des prozessbestimmenden Parameters. Über die Ansicht der sich bewegenden Bestandteile der Maschinenkomponente kann auch ein Änderungsbedarf weiterer Prozessparameter unterhalb der prozessbestimmenden Parameter sichtbar werden.

In einer weiteren Ausführungsform ist das Steuerungsprogramm so ausgebildet, dass das Durchfahren vom Bediener zu jedem Zeitpunkt auf dem Parameter-Zeit-Diagramm geeignet unterbrochen und fortgesetzt werden kann, wobei die bewegte Abbildung der Bestandteile in der Position des Zeitpunkts anhält, bei dem das Durchfahren unterbrochen wurde, und entsprechend bei fortgesetztem Durchfahren ab dieser Position weiterläuft. Das Anhalten an einer bestimmten Position ermöglicht die visuelle Detailkontrolle der Korrektheit von Maschinenstellungen zu jedem beliebigen Zeitpunkt auf der Bewegungskurve. Das Durchfahren kann beispielsweise mittels eines Halteknopfes oder durch Tippen auf die Bewegungskurve oder das Parameter-Zeit-Diagramm etc. gestoppt und/oder wieder fortgesetzt werden. In einer bevorzugten Ausführungsform stellt das Steuerungsprogramm auf der Visualisierungseinrichtung dafür einen Schieber bereit, mit dem das Durchfahren des Parameter-Zeit-Diagramms gestoppt, gestartet, vor- und zurückgespult und/oder in Zeitlupe oder in Einzelschritten mit entsprechende korrelierter Abbildung der Bestandteile ausgeführt werden kann.

In einer weiteren Ausführungsform ist das Steuerungsprogramm dazu ausgestaltet, aus den Bewegungskurven für die einzelnen Maschinenkomponenten ein Ablaufdiagramm für die gesamte Produktionsmaschine zu berechnen und auf der Visualisierungseinrichtung darzustellen, vorzugsweise als Balkendiagramm in den jeweiligen Maschinenkomponenten zugeordneten separaten Zeilen. Hierbei kann beispielsweise die langsamste Maschinenkomponente markiert werden. Wenn die Gesamttaktzeit der Produktionsmaschine verkürzt werden soll, muss der Durchsatz bei der langsamsten Maschinenkomponente optimiert werden. Dies kann mit der erfindungsgemäßen Visualisierung vorgenommen werden.

In einer weiteren Ausführungsform ist das Steuerungsprogramm so ausgestaltet, auf zumindest einer der separaten Visualisierungsseiten Schalt-Tabs zugeordnet zu den einzelnen Bestandteilen der durch die Visualisierungsseite visualisierten Maschinenkomponente anzuzeigen, mit denen zusätzlich zur Darstellung des dem jeweiligen Schalt-Tab zugeordneten Bestandteils optional ein anderer Bestandteil als zusätzliche Bewegungskurve in das Parameter-Zeit-Diagramm und/oder in die Abbildung der Bestandteile mit eingeblendet werden kann.

In einer weiteren Ausführungsform ist das Steuerungsprogramm so ausgestaltet, dass die Visualisierung der Maschinenkomponenten in ihrer Funktion bei der Produktion und die Eingabe von Prozessparametern in die jeweiligen Schaltfelder ohne realen Betrieb der Produktionsmaschine durchgeführt werden kann. So kann der Prozess auf der Produktionsmaschine "offline" eingestellt und optimiert werden, sodass der reale Produktionsbeginn gleich mit optimierten Prozessparametern begonnen werden kann.

Die Erfindung betrifft des Weiteren ein Verfahren zum Optimieren von Prozessparametern für eine Produktionsmaschine umfassend mehrere Maschinenkomponenten und eine Maschinensteuerung zur Steuerung der Produktionsmaschine umfassend ein Steuerungsprogramm mit einer als Visualisierungseinrichtung, vorzugsweise ein berührungsempfindlicher Bildschirm, ausgebildeten interaktiven Benutzerschnittstelle, umfassend nachfolgende ausgeführte Schritte:
- Visualisieren zumindest einer, vorzugsweise aller, der Maschinenkomponenten in ihrer Funktion bei der Produktion in einer Mehrfachdarstellung für jede dieser Maschinenkomponenten auf der Visualisierungseinrichtung und Bereitstellen entsprechender Schaltfelder zur Eingabe von Prozessparametern in Bezug auf die jeweils visualisierte Maschinenkomponente durch das Steuerungsprogramm, wobei die Mehrfachdarstellung zumindest ein Parameter-Zeit-Diagramm mit Bewegungskurven von Bestandteilen der jeweilige Maschinenkomponente und eine dazu korrelierte Abbildung der Bestandteile dieser Maschinenkomponente umfasst;
- Berechnen der Bewegungskurven basierend auf den über die Schaltfelder eingegebenen oder im Steuerungsprogramm bereits vorhandenen Prozessparameter für die jeweiligen Maschinenkomponenten durch das Steuerungsprogramm;
- Unterteilen zumindest einer der Bewegungskurven in unterschiedliche geeignet visualisierte Bewegungsabschnitte durch das Steuerungsprogramm;
- Visualisieren des prozessbestimmenden Prozessparameters für den jeweiligen Bewegungsabschnitt durch das Steuerungsprogramm;
- Variieren der Prozessparameter über die Schaltfelder basierend auf den visualisiert prozessbestimmenden Prozessparameter für die jeweiligen Bewegungsabschnitte;
- Anpassen der entsprechenden Bewegungskurven auf Basis der variierten Prozessparameter durch das Steuerungsprogramm inklusive der Visualisierung des prozessbestimmenden Prozessparameters für den jeweiligen Bewegungsabschnitt durch das Steuerungsprogramm; und
- Wiederholen der vorangegangenen Schritte zum Optimierung der Prozessparameter für die Produktionsmaschine.

Mit dem erfindungsgemäßen Verfahren wird die Optimierung des Prozessparametersatzes für die Produktionsmaschine auf eine objektivere Basis und dem Benutzer eine Prozessvisualisierung zur Verfügung gestellt, mit der er unabhängig von seiner Erfahrung schneller zu einem für die Produktion optimaleren Prozessparametersatz gelangen kann.

In einer Ausführungsform des Verfahrens besitzen die Bewegungsabschnitte eine von den über die Schaltfelder eingegebenen Prozessparameter abhängige Länge und das Steuerungsprogramm passt die Länge der Bewegungsabschnitte und den jeweils visualisierten prozessbestimmenden Prozessparameter an die jeweiligen Eingaben an.

In einer weiteren Ausführungsform umfasst das Verfahren den weiteren Schritt des Indizierens der Schaltfelder der jeweils prozessbestimmenden Prozessparameter mit denselben Farben wie die entsprechenden Bewegungsabschnitte, wo diese Prozessparameter prozessbestimmend sind, wobei die Bewegungskurven mittels unterschiedlicher Farben in die unterschiedlichen Bewegungsabschnitte unterteilt sind.

In einer weiteren Ausführungsform umfasst das Verfahren den weiteren Schritt des Durchfahrens der Bewegungskurven des Parameter-Zeit-Diagramms auf der Visualisierungseinrichtung korreliert mit der entsprechend bewegten Abbildung der Bestandteile der Maschinenkomponente in ihren jeweiligen Positionen zu jedem Zeitpunkt im Parameter-Zeit-Diagramm. Der gezeigte Ablauf in der jeweiligen Maschinenkomponente bietet weitere Einsicht in den Prozessablauf zusätzlich zu der Angabe des prozessbestimmenden Parameters. Über die Ansicht der sich bewegenden Bestandteile der Maschinenkomponente kann ein Änderungsbedarf weiterer Prozessparameter unterhalb der prozessbestimmenden Parameter sichtbar werden.

In einer weiteren Ausführungsform umfasst das Verfahren die weiteren Schritte
- Berechnen eines Ablaufdiagramms für die gesamte Produktionsmaschine aus den Bewegungskurven für die einzelnen Maschinenkomponenten; und
- Darstellen des Ablaufdiagramms auf der Visualisierungseinrichtung, vorzugsweise als Balkendiagramm in den jeweiligen Maschinenkomponenten zugeordneten separaten Zeilen.

In einer weiteren Ausführungsform wird das Verfahren zum Optimieren der Prozessparameter für die Produktionsmaschine durch die Visualisierung der Maschinenkomponenten in ihrer Funktion bei der Produktion und die Eingabe von Prozessparametern in die jeweiligen Schaltfelder außerhalb des realen Betriebs der Produktionsmaschine durchgeführt.

Die Erfindung betrifft des Weiteren einen Datenträger mit einem darauf gespeicherten Steuerungsprogramm geeignet zur Ausführung des erfindungsgemäßen Verfahrens oder zur Steuerung einer erfindungsgemäßen Produktionsmaschine.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

### Kurze Beschreibung der Figuren

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugszeichen gekennzeichnet, wobei die Komponenten nicht in allen Figuren beziffert und erläutert sein müssen.

Die Zeichnung zeigen:
- Fig. 1: schematische Darstellung der erfindungsgemäßen Produktionsmaschine;
- Fig.2: eine Ausführungsform der Visualisierung einer Maschinenkomponente auf der Visualisierungseinrichtung gemäß der vorliegenden Erfindung;
- Fig.3: ein Ausschnitt der Fig.2 mit angezeigten Bewegungsabschnitten der Bewegungskurven;
- Fig.4: schematische Darstellung eines Ablaufdiagramms gemäß der vorliegenden Erfindung;
- Fig.5:: schematische Darstellung eines erfindungsgemäßen Datenträgers mit dem erfindungsgemäßen Steuerungsprogramm; und
- Fig.6: eine Ausführungsform des Verfahrens zum Optimieren von Prozessparametern für eine Produktionsmaschine gemäß der vorliegenden Erfindung.

### Ausführungsbeispiele

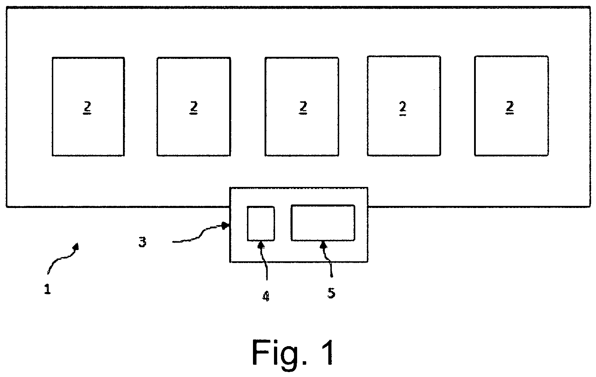

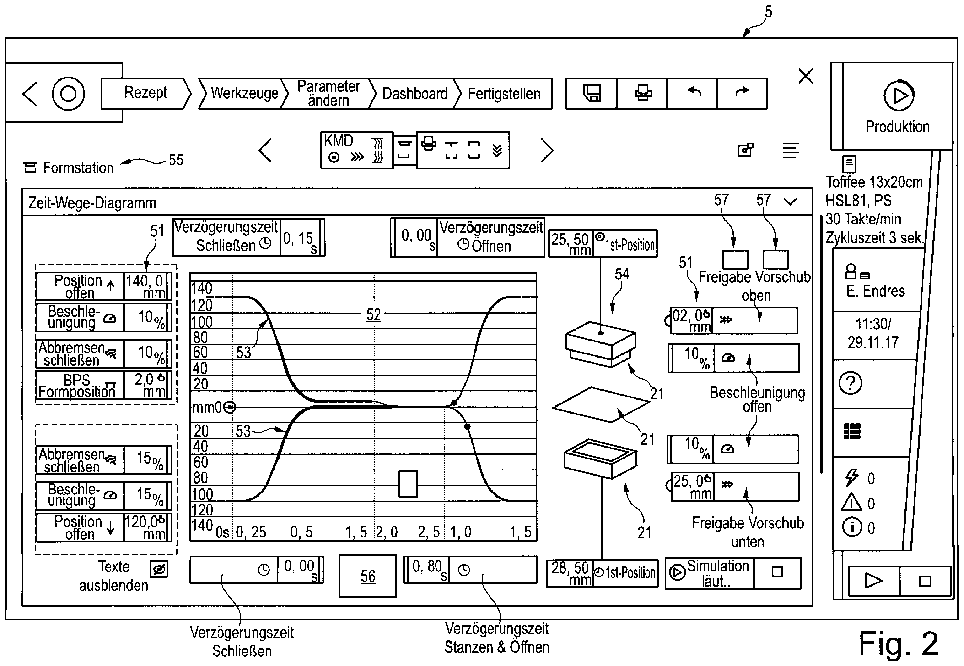

Fig. 1 zeigt eine schematische Darstellung der erfindungsgemäßen Produktionsmaschine 1 zur Kunststoffverarbeitung, die mehrere Maschinenkomponenten 2 (hier fünf Maschinenkomponenten wie beispielsweise eine Vorheizstation, eine Heizstation, eine Formstation, eine Schneidestation und eine Stapelstation einer Thermoformanlage zum Tiefziehen von Formteilen aus einer erwärmten Kunststoff-Folienbahn) und eine Maschinensteuerung 3 zur Steuerung der kunststoffverarbeitende Maschine 1 umfasst. Die Maschinensteuerung 3 umfasst dabei ein Steuerungsprogramm 4 mit einer als Visualisierungseinrichtung 5, vorzugsweise ein berührungsempfindlicher Bildschirm, ausgebildeten interaktiven Benutzerschnittstelle, wobei das Steuerungsprogramm 3 dazu ausgestaltet ist, auf der Visualisierungseinrichtung 5 zumindest eine, vorzugsweise alle, der Maschinenkomponenten 2 in ihrer Funktion bei der Produktion in jeweils einer Darstellung für jede dieser Maschinenkomponenten zu visualisieren und entsprechende Schaltfelder 51 zur Eingabe von Prozessparametern in Bezug auf die jeweils visualisierte Maschinenkomponente 2 bereitzustellen. Für Details zur Visualisierungseinrichtung 5 wird auf die Figuren 2 - 4 verwiesen. Das Steuerungsprogramm 4 kann dabei so ausgestaltet sein, dass die Visualisierung der Maschinenkomponenten 2 in ihrer Funktion bei der Produktion und die Eingabe von Prozessparametern in die jeweiligen Schaltfelder 51 ohne realen Betrieb der Produktionsmaschine 1 durchgeführt werden kann. Das Steuerungsprogramm 4 kann dabei für jede visualisierte Maschinenkomponente 2 eine separate Visualisierungsseite 55 auf der Visualisierungseinrichtung 5 bereitstellen, wobei geeignete Schaltfelder 51 zum Wechsel zwischen einzelnen Visualisierungsseiten 55 bereitgestellt werden.

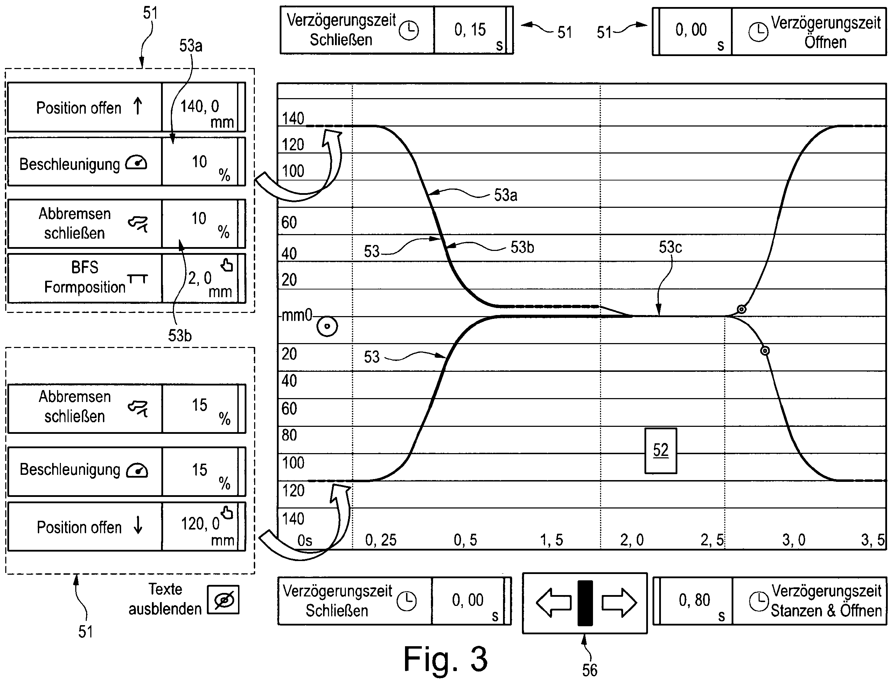

Fig.2 zeigt eine Ausführungsform der Visualisierung einer Maschinenkomponente 2 auf der Visualisierungseinrichtung 5 gemäß der vorliegenden Erfindung, wo vorzugsweise alle, hier als Beispiel einer separaten Visualisierungsseite 55 die "Formstation" einer Thermoformmaschine als eine Maschinenkomponenten 2 in ihrer Funktion bei der Produktion in jeweils einer Darstellung für jede dieser Maschinenkomponenten visualisiert und entsprechende Schaltfelder 51 zur Eingabe von Prozessparametern in Bezug auf die jeweils visualisierte Maschinenkomponente 2 bereitgestellt sind. Die Darstellung ist hier als Mehrfachdarstellung ausgeführt und umfasst ein Parameter-Zeit-Diagramm 52 mit Bewegungskurven 53 hier von drei Bestandteilen 21 der Formstation 2, nämlich das Oberwerkzeug 21, das Unterwerkzeug 21 und dazwischen die Folienbahn 21, aus der das spätere Formteil geformt werden soll. Die Formstation 2 ist hier im geöffneten Zustand gezeigt. Die beiden dem Ober- und Unterwerkzeug 21 zugeordneten Bewegungskurven 53 sind in unterschiedlich visualisierte Bewegungsabschnitte 53a, 53b, 53c unterteilt, wie in Fig.3 näher erläutert wird. Hierbei ist der jeweils für diesen Bewegungsabschnitt 53a, 53b, 53c prozessbestimmende Prozessparameter visualisiert, der über die bereitgestellten Schaltfelder 51 variierbar ist. Außerdem umfasst die Mehrfachdarstellung zusätzlich zum Parameter-Zeit-Diagramm 52 eine zu den Bewegungskurven korrelierte Abbildung 54 der Bestandteile dieser Maschinenkomponente 2, hier der Formstation. Die Abbildung 54 der Bestandteile der Maschinenkomponente ist als eine perspektivisch dreidimensionale Abbildung der Bestandteil 21 ausgeführt, wobei nur die Bestandteile 21 gezeigt werden, die sich gemäß den Bewegungskurven 53 im Parameter-Zeit-Diagramm 52 auch bewegen. Außerdem ist die Abbildung 54 der Bestandteile der Maschinenkomponente durch das Steuerungsprogramm 4 direkt angrenzend an das Parameter-Zeit-Diagramm 52 auf dessen rechter Seite auf der Visualisierungseinrichtung 5 angeordnet. Die Schaltfelder 51 zur Eingabe von Prozessparametern, die Einfluss auf eine bestimmte Bewegungskurve 53 haben, sind durch das Steuerungsprogramm 4 separat von den anderen Schaltfelder 51 mit Einfluss auf die anderen Bewegungskurven 53 auf der Visualisierungseinrichtung 5 angeordnet. Hierbei sind die Schaltfelder 51 mit Einfluss auf bestimmte Bewegungskurven 53 in mehreren Bereichen auf der Visualisierungseinrichtung 5 horizontal rechts und links neben dem Parameter-Zeit-Diagramm 52 angeordnet, während Schaltfelder 51 mit allgemeinem Einfluss auf die Bewegungskurven 53 auf der Visualisierungseinrichtung 5 oberhalb und/oder unterhalb des Parameter-Zeit-Diagramms 52 angeordnet sind. Das Steuerungsprogramm 4 ermöglicht ferner ein Durchfahren der Bewegungskurven 53 des Parameter-Zeit-Diagramms 52 auf der Visualisierungseinrichtung 5, wobei das Durchfahren korreliert ist mit der entsprechend bewegten Abbildung 54 der Bestandteile der Maschinenkomponente in ihren jeweiligen Positionen zu jedem Zeitpunkt im Parameter-Zeit-Diagramm 52. Dabei ist das Steuerungsprogramm 4 so ausgebildet, dass das Durchfahren vom Bediener zu jedem Zeitpunkt auf dem Parameter-Zeit-Diagramm 52 geeignet unterbrochen und fortgesetzt werden kann, wobei die bewegte Abbildung 54 der Bestandteile in der Position des Zeitpunkts anhält, bei dem das Durchfahren unterbrochen wurde, und entsprechend bei fortgesetztem Durchfahren ab dieser Position weiterläuft. Dafür stellt das Steuerungsprogramm 4 auf der Visualisierungseinrichtung 5 einen Schieber 56 bereit, mit dem das Durchfahren des Parameter-Zeit-Diagramms 52 gestoppt, gestartet, vor- und zurückgespult und/oder in Zeitlupe oder in Einzelschritten mit entsprechende korrelierter Abbildung 54 der Bestandteile ausgeführt werden kann.

In einer hier nicht gezeigten Ausführungsform könnte die Visualisierungsseite "Formstation" einen Vordehnstempel als weiteren Bestandteil 21 im Oberwerkzeug 21 als zusätzliche Bewegungskurve 53 in das Parameter-Zeit-Diagramm 52 und/oder zusätzlich oder alternativ zu den Ober- und Unterwerkzeugen 21 in der Abbildung 54 darstellen. So kann die separate Visualisierungsseite 55 "Formstation" in dieser alternativen Ausführungsform zusätzliches Schaltfelder in Form von Schalt-Tabs 57 umfassen, wobei ein erster Schalt-Tab 57 der Darstellung der Ober- und Unterwerkzeuge 21 im Parameter-Zeit-Diagramm 52 und/oder in der Abbildung 54 zugeordnet ist und ein anderer Schalt-Tab 57 der Darstellung des Vordehnstempels 21 im Parameter-Zeit-Diagramm 52 und/oder in der Abbildung 54 zugeordnet ist. Damit könnte visualisiert werden, wie sich der Vordehnstempel 21 in Bezug auf die als Tische dargestellten Ober- und Unterwerkzeuge 21 bewegt. Mittels Schalt-Tab-Umschaltung könnte visualisiert werden, dass im Schalt-Tab 57 für das Ober- und Unterwerkzeug 21 optional der Vordehnstempel im Parameter-Zeit-Diagramm 52 und/oder in der Abbildung 54 mit eingeblendet wird. Wechsel man in den Schalt-Tab "Vordehnstempel" werden optional die Ober- und Unterwerkzeuge eingeblendet.

Fig.3 zeigt einen Ausschnitt der Fig.2 mit angezeigten Bewegungsabschnitten 53a, 53b, 53c der Bewegungskurven 53. Hierbei sind alle beide Bewegungskurven 53 des Parameter-Zeit-Diagramms 52, hier ein Weg-Zeit-Diagramm, in unterschiedliche geeignet visualisierte Bewegungsabschnitte 53a, 53b, 53c unterteilt sind. Die Bewegungsabschnitte 53a, 53b, 53c besitzen dabei eine von den über die Schaltfelder 51 eingegebenen Prozessparameter abhängige Länge, wobei das Steuerungsprogramm 4 die Länge der Bewegungsabschnitte 53a, 53b, 53c und den jeweils visualisierten prozessbestimmenden Prozessparameter an die jeweiligen Eingaben anpasst. Hier sind die Bewegungskurven 53 mittels unterschiedlicher Farben in die unterschiedlichen Bewegungsabschnitte 53a, 53b, 53c unterteilt und die Schaltfelder 51 der jeweils prozessbestimmenden Prozessparameter sind mit denselben Farben wie die entsprechenden Bewegungsabschnitte 53a, 53b, 53c, wo diese Prozessparameter prozessbestimmend sind, indiziert. Bei Eingabe des prozessbestimmenden Prozessparameters über das entsprechende Schaltfeld 51 wird zudem der entsprechende Bewegungsabschnitt 53a, 53b, 53c auf der Bewegungskurve 53 hervorgehoben.

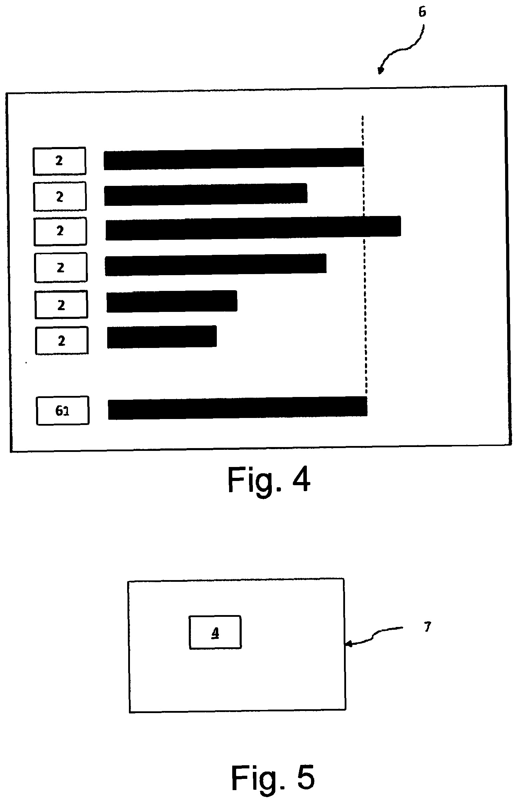

Fig.4 zeigt eine schematische Darstellung eines Ablaufdiagramms 6 gemäß der vorliegenden Erfindung. Das Steuerungsprogramm 4 ist dabei dazu ausgestaltet, aus den Bewegungskurven 53 für die einzelnen Maschinenkomponenten 2 das Ablaufdiagramm 6 für die gesamte Produktionsmaschine 1 zu berechnen und auf der Visualisierungseinrichtung 5 als Balkendiagramm in den jeweiligen Maschinenkomponenten 2 zugeordneten separaten Zeilen darzustellen. Hierbei kann beispielsweise eine Solllänge 61 (Zeitdauer) des Gesamtprozesses auf der Produktionsmaschine 1 vorgegeben sein, sodass aus dem Ablaufdiagramm sichtbar wird, welcher Prozess bzw. welche Maschinekomponenten 2 noch optimiert werden muss, damit die Solllänge 61 des Produktionsprozesses eingehalten werden kann.

Fig.5 zeigt eine schematische Darstellung eines erfindungsgemäßen Datenträgers 7 mit dem erfindungsgemäßen Steuerungsprogramm 4 zur Ausführung des erfindungsgemäßen Verfahrens bzw. zur Steuerung der erfindungsgemäßen Produktionsmaschine.

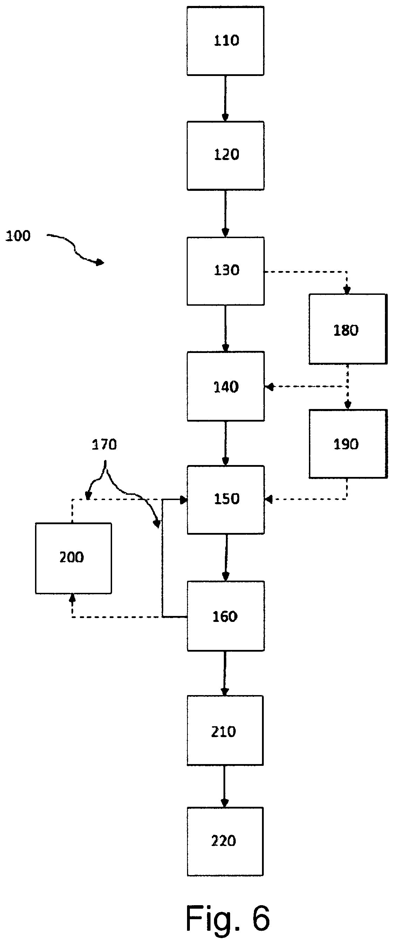

Fig.6 zeigt eine Ausführungsform des Verfahrens 100 zum Optimieren von Prozessparametern für eine Produktionsmaschine 1 gemäß der vorliegenden Erfindung umfassend mehrere Maschinenkomponenten 2 und eine Maschinensteuerung 3 zur Steuerung der Produktionsmaschine 1 umfassend ein Steuerungsprogramm 4 mit einer als Visualisierungseinrichtung 5, vorzugsweise ein berührungsempfindlicher Bildschirm, ausgebildeten interaktiven Benutzerschnittstelle, umfassend nachfolgende ausgeführte Schritte des Visualisierens 110 zumindest einer, vorzugsweise aller, der Maschinenkomponenten 2 in ihrer Funktion bei der Produktion in einer Mehrfachdarstellung für jede dieser Maschinenkomponenten 2 auf der Visualisierungseinrichtung 5 und Bereitstellen entsprechender Schaltfelder 51 zur Eingabe von Prozessparametern in Bezug auf die jeweils visualisierte Maschinenkomponente 2 durch das Steuerungsprogramm 4, wobei die Mehrfachdarstellung zumindest ein Parameter-Zeit-Diagramm 52 mit Bewegungskurven 53 von ein oder mehreren Bestandteilen 21 der jeweilige Maschinenkomponente 2 und eine dazu korrelierte Abbildung 54 der Bestandteile dieser Maschinenkomponente umfasst; des Berechnens 120 der Bewegungskurven basierend auf den über die Schaltfelder 51 eingegebenen oder im Steuerungsprogramm 4 bereits vorhandenen Prozessparameter für die jeweiligen Maschinenkomponenten 2 durch das Steuerungsprogramm 4; des Unterteilens 130 zumindest einer der Bewegungskurven 53 in unterschiedliche geeignet visualisierte Bewegungsabschnitte 53a, 53b, 53c durch das Steuerungsprogramm 4; des Visualisierens 140 des prozessbestimmenden Prozessparameters für den jeweiligen Bewegungsabschnitt 53a, 53b, 53c durch das Steuerungsprogramm 4; des Variierens 150 der Prozessparameter über die Schaltfelder 51 basierend auf den visualisiert prozessbestimmenden Prozessparameter für die jeweiligen Bewegungsabschnitte 53a, 53b, 53c; des Anpassens 160 der entsprechenden Bewegungskurven 53 auf Basis der variierten Prozessparameter durch das Steuerungsprogramm 4 inklusive der Visualisierung des prozessbestimmenden Prozessparameters für den jeweiligen Bewegungsabschnitt 53a, 53b, 53c durch das Steuerungsprogramm 4; und des Wiederholens 170 der vorangegangenen Schritte zum Optimierung der Prozessparameter für die Produktionsmaschine. Hierbei können die Bewegungsabschnitte 53a, 53b, 53c eine von den über die Schaltfelder 51 eingegebenen Prozessparameter abhängige Länge besitzen und das Steuerungsprogramm 4 passt 180 die Länge der Bewegungsabschnitte 53a, 53b, 53c und den jeweils visualisierten prozessbestimmenden Prozessparameter an die jeweiligen Eingaben an. Das Verfahren 100 kann ferner den weiteren Schritt des Indizierens 190 der Schaltfelder 51 der jeweils prozessbestimmenden Prozessparameter mit denselben Farben wie die entsprechenden Bewegungsabschnitte 53a, 53b, 53c, wo diese Prozessparameter prozessbestimmend sind, umfassen, wobei die Bewegungskurven 53 mittels unterschiedlicher Farben in die unterschiedlichen Bewegungsabschnitte 53a, 53b, 53c unterteilt sind. Das Verfahren 100 kann ferner den weiteren Schritt des Durchfahrens 200 der Bewegungskurven 53 des Parameter-Zeit-Diagramms 52 auf der Visualisierungseinrichtung 5 korreliert mit der entsprechend bewegten Abbildung 54 der Bestandteile der Maschinenkomponente in ihren jeweiligen Positionen zu jedem Zeitpunkt im Parameter-Zeit-Diagramm 52 umfassen. Das Verfahren 100 kann ferner die weiteren Schritte des Berechnens 210 eines Ablaufdiagramms 6 für die gesamte Produktionsmaschine 1 aus den Bewegungskurven 53 für die einzelnen Maschinenkomponenten 2; und des Darstellens 220 des Ablaufdiagramms 6 auf der Visualisierungseinrichtung 5, vorzugsweise als Balkendiagramm in den jeweiligen Maschinenkomponenten 2 zugeordneten separaten Zeilen, umfassen. Dabei kann das Verfahren 100 zum Optimieren der Prozessparameter für die Produktionsmaschine 1 durch die Visualisierung der Maschinenkomponenten 2 in ihrer Funktion bei der Produktion und die Eingabe von Prozessparametern in die jeweiligen Schaltfelder 51 außerhalb des realen Betriebs der Produktionsmaschine 1 durchgeführt werden.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um auch erläuterte Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

### Liste der verwendeten Bezugszeichen

- 1: Produktionsmaschine, beispielweise eine Thermoformmaschine oder eine Blasformmaschine
- 2: Maschinenkomponente(n)
- 21: Bestandteil(e) der Maschinenkomponente
- 3: Maschinensteuerung
- 4: Steuerungsprogramm
- 5: Visualisierungseinrichtung
- 51: Schaltfeld(er)
- 52: Parameter-Zeit-Diagramm
- 53: Bewegungskurven
- 53a-c: Bewegungsabschnitte der Bewegungskurven
- 54: Abbildung der Bestandteile der Maschinenkomponente
- 55: separate Visualisierungsseite für jede visualisierte Maschinenkomponente
- 56: Schieber zum Beeinflussen des Durchfahrens der Bewegungskurven
- 57: Schalt-Tabs
- 6: Ablaufdiagramm
- 61: Solllänge der Prozesse
- 7: Datenträger

- 100: Verfahren zum Optimieren von Prozessparametern für eine Produktionsmaschine
- 110: Visualisieren zumindest einiger der Maschinenkomponenten
- 120: Berechnung der Bewegungskurven
- 130: Unterteilen der Bewegungskurve(n) in unterschiedliche geeignet visualisierte Bewegungsabschnitte
- 140: Visualisieren des prozessbestimmenden Prozessparameters für den jeweiligen Bewegungsabschnitt
- 150: Variieren der Prozessparameter über die Schaltfelder
- 160: Anpassung der Bewegungskurven auf Basis der variierten Prozessparameter
- 170: Wiederholen vorangegangener Schritte zum Optimierung der Prozessparameter
- 180: Anpassen der Länge der Bewegungsabschnitte
- 190: Indizieren der Schaltfelder der jeweils prozessbestimmenden Prozessparameter
- 200: Durchfahrens der Bewegungskurven des Parameter-Zeit-Diagramms
- 210: Berechnen eines Ablaufdiagramm für die gesamte Produktionsmaschine aus den Bewegungskurven für die einzelnen Maschinenkomponenten
- 220: Darstellen des Ablaufdiagramms auf der Visualisierungseinrichtung

## Patentansprüche

1. Eine Produktionsmaschine (1) zur Kunststoffverarbeitung umfassend mehrere Maschinenkomponenten (2) und eine Maschinensteuerung (3) zur Steuerung der kunststoffverarbeitende Maschine (1) umfassend ein Steuerungsprogramm (4) mit einer als Visualisierungseinrichtung (5), vorzugsweise ein berührungsempfindlicher Bildschirm, ausgebildeten interaktiven Benutzerschnittstelle, wobei das Steuerungsprogramm (3) dazu ausgestaltet ist, auf der Visualisierungseinrichtung (5) zumindest eine, vorzugsweise alle, der Maschinenkomponenten (2) in ihrer Funktion bei der Produktion in jeweils einer Darstellung für jede dieser Maschinenkomponenten zu visualisieren und entsprechende Schaltfelder (51) zur Eingabe von Prozessparametern in Bezug auf die jeweils visualisierte Maschinenkomponente (2) bereitzustellen, **dadurch gekennzeichnet, dass**
die Darstellung zumindest ein Parameter-Zeit-Diagramm (52) mit Bewegungskurven (53) von ein oder mehreren Bestandteilen (21) der jeweilige Maschinenkomponente (2) umfasst, wobei zumindest eine der Bewegungskurven (53) in unterschiedliche geeignet visualisierte Bewegungsabschnitte (53a, 53b, 53c) unterteilt ist, für die jeweils der für diesen Bewegungsabschnitt (53a, 53b, 53c) prozessbestimmende Prozessparameter visualisiert ist, der über die bereitgestellten Schaltfelder (51) variierbar ist, vorzugsweise ist die Darstellung als Mehrfachdarstellung ausgeführt, die zusätzlich zum Parameter-Zeit-Diagramm (52) eine zu den Bewegungskurven korrelierte Abbildung (54) der Bestandteile dieser Maschinenkomponente umfasst.

2. Die Produktionsmaschine (1) nach Anspruch 1,
**dadurch gekennzeichnet,**
**dass** alle Bewegungskurven (53) des Parameter-Zeit-Diagramms (52) in unterschiedliche geeignet visualisierte Bewegungsabschnitte (53a, 53b, 53c) unterteilt sind.

3. Die Produktionsmaschine (1) nach Anspruch 1 oder 2,
**dadurch gekennzeichnet,**
**dass** die Bewegungsabschnitte (53a, 53b, 53c) eine von den über die Schaltfelder (51) eingegebenen Prozessparameter abhängige Länge besitzen, wobei das Steuerungsprogramm (4) die Länge der Bewegungsabschnitte (53a, 53b, 53c) und den jeweils visualisierten prozessbestimmenden Prozessparameter an die jeweiligen Eingaben anpasst.

4. Die Produktionsmaschine (1) nach einem der voranstehenden Ansprüche,
**dadurch gekennzeichnet,**
**dass** die Bewegungskurven (53) mittels unterschiedlicher Farben in die unterschiedlichen Bewegungsabschnitte (53a, 53b, 53c) unterteilt sind.

5. Die Produktionsmaschine (1) nach Anspruch 4,
**dadurch gekennzeichnet,**
**dass** die Schaltfelder (51) der jeweils prozessbestimmenden Prozessparameter mit denselben Farben wie die entsprechenden Bewegungsabschnitte (53a, 53b, 53c), wo diese Prozessparameter prozessbestimmend sind, indiziert sind.

6. Die Produktionsmaschine (1) nach Anspruch 4 oder 5,
**dadurch gekennzeichnet,**
**dass** bei Eingabe des prozessbestimmenden Prozessparameters über das entsprechende Schaltfeld (51) der entsprechende Bewegungsabschnitt (53a, 53b, 53c) auf der Bewegungskurve (53) hervorgehoben wird.

7. Die Produktionsmaschine (1) nach einem der voranstehenden Ansprüche,
**dadurch gekennzeichnet,**
**dass** die Abbildung (54) der Bestandteile der Maschinenkomponente eine perspektivisch dreidimensionale Abbildung der Bestandteil (21) ist.

8. Die Produktionsmaschine (1) nach einem der voranstehenden Ansprüche,
**dadurch gekennzeichnet,**
**dass** in der Abbildung (54) der Bestandteile der Maschinenkomponente nur die Bestandteile (21) gezeigt werden, die sich gemäß den Bewegungskurven (53) im Parameter-Zeit-Diagramm (52) bewegen.

9. Die Produktionsmaschine (1) nach einem der voranstehenden Ansprüche,
**dadurch gekennzeichnet,**
**dass** die Abbildung (54) der Bestandteile der Maschinenkomponente durch das Steuerungsprogramm (4) direkt angrenzend an das Parameter-Zeit-Diagramm (52) auf der Visualisierungseinrichtung (5) angeordnet ist.

10. Die Produktionsmaschine (1) nach einem der voranstehenden Ansprüche,
**dadurch gekennzeichnet,**
**dass** die Schaltfelder (51) zur Eingabe von Prozessparametern, die Einfluss auf eine bestimmte Bewegungskurve (53) haben, durch das Steuerungsprogramm (4) separat von den anderen Schaltfelder (51) mit Einfluss auf die anderen Bewegungskurven (53) auf der Visualisierungseinrichtung (5) angeordnet sind.

11. Die Produktionsmaschine (1) nach Anspruch 10,
**dadurch gekennzeichnet,**
**dass** die Schaltfelder (51) mit Einfluss auf bestimmte Bewegungskurven (53) in einem oder mehreren Bereichen auf der Visualisierungseinrichtung (5) horizontal neben dem Parameter-Zeit-Diagramm (52) angeordnet sind, während Schaltfelder (51) mit allgemeinen Einfluss auf die Bewegungskurven (53) auf der Visualisierungseinrichtung (5) oberhalb und/oder unterhalb des Parameter-Zeit-Diagramms (52) angeordnet sind.

12. Die Produktionsmaschine (1) nach einem der voranstehenden Ansprüche,
**dadurch gekennzeichnet,**
**dass** das Steuerungsprogramm (4) für jede visualisierte Maschinenkomponente (2) eine separate Visualisierungsseite (55) auf der Visualisierungseinrichtung (5) bereitstellt, wobei geeignete Schaltfelder (51) zum Wechsel zwischen einzelnen Visualisierungsseiten (55) bereitgestellt werden.

13. Die Produktionsmaschine (1) nach einem der voranstehenden Ansprüche,
**dadurch gekennzeichnet,**
**dass** das Steuerungsprogramm (4) ein Durchfahren der Bewegungskurven (53) des Parameter-Zeit-Diagramms (52) auf der Visualisierungseinrichtung (5) ermöglicht, wobei das Durchfahren korreliert ist mit der entsprechend bewegten Abbildung (54) der Bestandteile der Maschinenkomponente in ihren jeweiligen Positionen zu jedem Zeitpunkt im Parameter-Zeit-Diagramm (52).

14. Die Produktionsmaschine (1) nach Anspruch 13,
**dadurch gekennzeichnet,**
**dass** das Steuerungsprogramm (4) so ausgebildet ist, dass das Durchfahren vom Bediener zu jedem Zeitpunkt auf dem Parameter-Zeit-Diagramm (52) geeignet unterbrochen und fortgesetzt werden kann, wobei die bewegte Abbildung (54) der Bestandteile in der Position des Zeitpunkts anhält, bei dem das Durchfahren unterbrochen wurde, und entsprechend bei fortgesetztem Durchfahren ab dieser Position weiterläuft.

15. Die Produktionsmaschine (1) nach Anspruch 14,
**dadurch gekennzeichnet,**
**dass** das Steuerungsprogramm (4) auf der Visualisierungseinrichtung (5) einen Schieber (56) bereitstellt, mit dem das Durchfahren des Parameter-Zeit-Diagramms (52) gestoppt, gestartet, vor- und zurückgespult und/oder in Zeitlupe oder in Einzelschritten mit entsprechende korrelierter Abbildung (54) der Bestandteile ausgeführt werden kann.

16. Die Produktionsmaschine (1) nach einem der voranstehenden Ansprüche,
**dadurch gekennzeichnet,**
**dass** das Steuerungsprogramm (4) dazu ausgestaltet ist, aus den Bewegungskurven (53) für die einzelnen Maschinenkomponenten (2) ein Ablaufdiagramm (6) für die gesamte Produktionsmaschine (1) zu berechnen und auf der Visualisierungseinrichtung (5) darzustellen, vorzugsweise als Balkendiagramm in den jeweiligen Maschinenkomponenten (2) zugeordneten separaten Zeilen.

17. Die Produktionsmaschine (1) nach einem der voranstehenden Ansprüche,
**dadurch gekennzeichnet,**
**dass** das Steuerungsprogramm (4) so ausgestaltet ist, auf zumindest einer der separaten Visualisierungsseiten (55) Schalt-Tabs (57) zugeordnet zu den einzelnen Bestandteilen (21) der durch die Visualisierungsseite (55) visualisierten Maschinenkomponente (2) anzuzeigen, mit denen zusätzlich zur Darstellung des dem jeweiligen Schalt-Tab (57) zugeordneten Bestandteils (21) optional ein anderer Bestandteil (21) als zusätzliche Bewegungskurve (53) in das Parameter-Zeit-Diagramm (52) und/oder in die Abbildung (54) der anderen Bestandteile (54) mit eingeblendet werden kann.

18. Die Produktionsmaschine (1) nach einem der voranstehenden Ansprüche,
**dadurch gekennzeichnet,**
**dass** das Steuerungsprogramm (4) so ausgestaltet ist, dass die Visualisierung der Maschinenkomponenten (2) in ihrer Funktion bei der Produktion und die Eingabe von Prozessparametern in die jeweiligen Schaltfelder (51) ohne realen Betrieb der Produktionsmaschine (1) durchgeführt werden kann.

19. Verfahren (100) zum Optimieren von Prozessparametern für eine Produktionsmaschine (1) umfassend mehrere Maschinenkomponenten (2) und eine Maschinensteuerung (3) zur Steuerung der Produktionsmaschine (1) umfassend ein Steuerungsprogramm (4) mit einer als Visualisierungseinrichtung (5), vorzugsweise ein berührungsempfindlicher Bildschirm, ausgebildeten interaktiven Benutzerschnittstelle, umfassend nachfolgende ausgeführte Schritte:
- Visualisieren (110) zumindest einer, vorzugsweise aller, der Maschinenkomponenten (2) in ihrer Funktion bei der Produktion in einer Mehrfachdarstellung für jede dieser Maschinenkomponenten (2) auf der Visualisierungseinrichtung (5) und Bereitstellen entsprechender Schaltfelder (51) zur Eingabe von Prozessparametern in Bezug auf die jeweils visualisierte Maschinenkomponente (2) durch das Steuerungsprogramm (4),
**dadurch gekennzeichnet, dass**
die Mehrfachdarstellung zumindest ein Parameter-Zeit-Diagramm (52) mit Bewegungskurven (53) von ein oder mehreren Bestandteilen (21) der jeweilige Maschinenkomponente (2) und eine dazu korrelierte Abbildung (54) der Bestandteile dieser Maschinenkomponente umfasst;
- Berechnen (120) der Bewegungskurven basierend auf den über die Schaltfelder (51) eingegebenen oder im Steuerungsprogramm (4) bereits vorhandenen Prozessparameter für die jeweiligen Maschinenkomponenten (2) durch das Steuerungsprogramm (4);
- Unterteilen (130) zumindest einer der Bewegungskurven (53) in unterschiedliche geeignet visualisierte Bewegungsabschnitte (53a, 53b, 53c) durch das Steuerungsprogramm (4);
- Visualisieren (140) des prozessbestimmenden Prozessparameters für den jeweiligen Bewegungsabschnitt (53a, 53b, 53c) durch das Steuerungsprogramm (4);
- Variieren (150) der Prozessparameter über die Schaltfelder (51) basierend auf den visualisiert prozessbestimmenden Prozessparameter für die jeweiligen Bewegungsabschnitte (53a, 53b, 53c);
- Anpassen (160) der entsprechenden Bewegungskurven (53) auf Basis der variierten Prozessparameter durch das Steuerungsprogramm (4) inklusive der Visualisierung des prozessbestimmenden Prozessparameters für den jeweiligen Bewegungsabschnitt (53a, 53b, 53c) durch das Steuerungsprogramm (4); und
- Wiederholen (170) der vorangegangenen Schritte zum Optimierung der Prozessparameter für die Produktionsmaschine.

20. Das Verfahren (100) nach Anspruch 19, wobei die Bewegungsabschnitte (53a, 53b, 53c) eine von den über die Schaltfelder (51) eingegebenen Prozessparameter abhängige Länge besitzen und das Steuerungsprogramm (4) die Länge der Bewegungsabschnitte (53a, 53b, 53c) und den jeweils visualisierten prozessbestimmenden Prozessparameter an die jeweiligen Eingaben anpasst (180).

21. Das Verfahren (100) nach Anspruch 19 oder 20, umfassend den weiteren Schritt des Indizierens (190) der Schaltfelder (51) der jeweils prozessbestimmenden Prozessparameter mit denselben Farben wie die entsprechenden Bewegungsabschnitte (53a, 53b, 53c), wo diese Prozessparameter prozessbestimmend sind, wobei die Bewegungskurven (53) mittels unterschiedlicher Farben in die unterschiedlichen Bewegungsabschnitte (53a, 53b, 53c) unterteilt sind.

22. Das Verfahren (100) nach Anspruch 19 bis 21, umfassend den weiteren Schritt des Durchfahrens (200) der Bewegungskurven (53) des Parameter-Zeit-Diagramms (52) auf der Visualisierungseinrichtung (5) korreliert mit der entsprechend bewegten Abbildung (54) der Bestandteile der Maschinenkomponente in ihren jeweiligen Positionen zu jedem Zeitpunkt im Parameter-Zeit-Diagramm (52).

23. Das Verfahren (100) nach Anspruch 19 bis 22, umfassend die weiteren Schritte
- Berechnen (210) eines Ablaufdiagramms (6) für die gesamte Produktionsmaschine (1) aus den Bewegungskurven (53) für die einzelnen Maschinenkomponenten (2); und
- Darstellen (220) des Ablaufdiagramms (6) auf der Visualisierungseinrichtung (5), vorzugsweise als Balkendiagramm in den jeweiligen Maschinenkomponenten (2) zugeordneten separaten Zeilen.

24. Das Verfahren (100) nach Anspruch 19 bis 23, wobei das Verfahren (100) zum Optimieren der Prozessparameter für die Produktionsmaschine (1) durch die Visualisierung der Maschinenkomponenten (2) in ihrer Funktion bei der Produktion und die Eingabe von Prozessparametern in die jeweiligen Schaltfelder (51) außerhalb des realen Betriebs der Produktionsmaschine (1) durchgeführt wird.

25. Ein Datenträger (7) mit einem darauf gespeicherten Steuerungsprogramm (4) geeignet zur Ausführung des Verfahrens (100) nach einem der Ansprüche 19 bis 24 oder zur Steuerung einer Produktionsmaschine (1) nach einem der Ansprüche 1 bis 18.

## Claims

1. Production machine (1) for plastics processing comprising a plurality of machine components (2) and a machine controller (3) for controlling the plastics processing machine (1) comprising a control program (4) with an interactive user interface designed as a visualization device (5), preferably a touch-sensitive screen, wherein the control program (3) is designed to visualize on the visualization device (5) at least one, preferably all, of the machine components (2) in their function during production in a display for each of these machine components and to provide corresponding switching fields (51) for inputting process parameters with respect to the respective visualized machine component (2),
**characterized in that**
the display comprises at least one parameter-time diagram (52) with movement curves (53) of one or more components (21) of the respective machine component (2), wherein at least one of the movement curves (53) is subdivided into different suitably visualized movement sections (53a, 53b, 53c), for which in each case the process-determining process parameter for this movement section (53a, 53b, 53c) is visualized, which can be varied via the provided switching fields (51), the display is preferably embodied as a multiple display which, in addition to the parameter-time diagram (52), comprises an image (54), correlated to the movement curves, of the components of this machine component.

2. Production machine (1) according to Claim 1,
**characterized**
**in that** all movement curves (53) of the parameter-time diagram (52) are divided into different suitably visualized movement sections (53a, 53b, 53c).

3. Production machine (1) according to Claim 1 or 2,
**characterized**
**in that** the movement sections (53a, 53b, 53c) have a length dependent on the process parameters input via the switching fields (51), wherein the control program (4) adapts the length of the movement sections (53a, 53b, 53c) and the respectively visualized process-determining process parameter to the respective inputs.

4. Production machine (1) according to any of the preceding claims,
**characterized**
**in that** the movement curves (53) are divided into the different movement sections (53a, 53b, 53c) by means of different colours.

5. Production machine (1) according to Claim 4,
**characterized**
**in that** the switching fields (51) of the respective process-determining process parameters are indexed with the same colours as the corresponding movement sections (53a, 53b, 53c) where these are process-determining process parameters.

6. Production machine (1) according to Claim 4 or 5,
**characterized**
**in that** when the process-determining process parameter is input via the corresponding switching field (51), the corresponding movement section (53a, 53b, 53c) is highlighted on the movement curve (53).

7. Production machine (1) according to any of the preceding claims,
**characterized**
**in that** the image (54) of the components of the machine component is a perspective three-dimensional image of the component (21).

8. Production machine (1) according to any of the preceding claims,
**characterized**
**in that** only the components (21) that move according to the movement curves (53) in the parameter-time diagram (52) are shown in the image (54) of the components of the machine component.

9. Production machine (1) according to any of the preceding claims,
**characterized**
**in that** the image (54) of the components of the machine component is arranged on the visualization device (5) by the control program (4) directly adjacent to the parameter-time diagram (52).

10. Production machine (1) according to any of the preceding claims,
**characterized**
**in that** the switching fields (51) for inputting process parameters that have an influence on a defined movement curve (53) are arranged on the visualization device (5) by the control program (4) separately from the other switching fields (51) with an influence on the other movement curves (53) .

11. Production machine (1) according to Claim 10,
**characterized**
**in that** the switching fields (51) with influence on certain movement curves (53) are arranged in one or more areas on the visualization device (5) horizontally next to the parameter-time diagram (52), while switching fields (51) with general influence on the movement curves (53) on the visualization device (5) are arranged above and/or below the parameter-time diagram (52).

12. Production machine (1) according to any of the preceding claims,
**characterized**
**in that** the control program (4) provides a separate visualization page (55) on the visualization device (5) for each visualized machine component (2), wherein suitable switching fields (51) for switching between individual visualization pages (55) are provided.

13. Production machine (1) according to any of the preceding claims,
**characterized**
**in that** the control program (4) enables traversal of the movement curves (53) of the parameter-time diagram (52) on the visualization device (5), wherein the traversal is correlated with the correspondingly moved image (54) of the components of the machine component in their respective positions at any point in time in the parameter-time diagram (52) .

14. Production machine (1) according to Claim 13,
**characterized**
**in that** the control program (4) is configured such that the traversal can be suitably interrupted and continued by the operator at any time on the parameter-time diagram (52), wherein the moving image (54) of the components stops at the position of the time at which the traversal was interrupted and correspondingly continues from this position as the traversal continues.

15. Production machine (1) according to Claim 14,
**characterized**
**in that** the control program (4) provides on the visualization device (5) a slider (56) with which the traversal through the parameter-time diagram (52) can be stopped, started, rewound and/or executed in slow motion or in individual steps with a corresponding correlated image (54) of the components.

16. Production machine (1) according to any of the preceding claims,
**characterized**
**in that** the control program (4) is designed to calculate a flow chart (6) for the entire production machine (1) from the movement curves (53) for the individual machine components (2) and to display it on the visualization device (5), preferably as a bar chart in separate rows assigned to the respective machine components (2).

17. Production machine (1) according to any of the preceding claims,
**characterized**
**in that** the control program (4) is designed to display, on at least one of the separate visualization pages (55), switching tabs (57) associated with the individual components (21) of the machine component (2) visualized by the visualization page (55), with which, in addition to displaying the component (21) associated with the respective switching tab (57), another component (21) can optionally be included as an additional movement curve (53) in the parameter-time diagram (52) and/or in the image (54) of the other components (54).

18. Production machine (1) according to any of the preceding claims,
**characterized**
**in that** the control program (4) is designed in such a way that the visualization of the machine components (2) in their function during production and the input of process parameters into the respective switching fields (51) can be carried out without real operation of the production machine (1) .

19. Method (100) for optimizing process parameters for a production machine (1) comprising several machine components (2) and a machine controller (3) for controlling the production machine (1) comprising a control program (4) with an interactive user interface designed as a visualization device (5), preferably a touch-sensitive screen, comprising the following steps:
- Visualizing (110) at least one, preferably all, of the machine components (2) in their function during production in a multiple display for each of these machine components (2) on the visualization device (5) and providing corresponding switching fields (51) for inputting process parameters with respect to the respective visualized machine component (2) by the control program (4),
**characterized**
**in that** the multiple display comprises at least one parameter-time diagram (52) with movement curves (53) of one or more components (21) of the respective machine component (2) and an image (54), correlated thereto, of the components of said machine component;
- Calculating (120), using the control program (4), the movement curves based on the process parameters for the respective machine components (2) input via the switching fields (51) or already present in the control program (4);
- Dividing (130) at least one of the movement curves (53) into different suitably visualized movement sections (53a, 53b, 53c) using the control program (4);
- Visualizing (140) the process-determining process parameter for the respective movement section (53a, 53b, 53c) using the control program (4);
- Varying (150) the process parameters across the switching fields (51) based on the visualized process-determining process parameters for the respective movement sections (53a, 53b, 53c);
- Adjusting (160) the corresponding movement curves (53) based on the varied process parameters using the control program (4), including visualizing the process-determining process parameter for the respective movement section (53a, 53b, 53c) using the control program (4); and
- Repeating (170) the previous steps to optimize the process parameters for the production machine.

20. Method (100) according to Claim 19, wherein the movement sections (53a, 53b, 53c) have a length dependent on the process parameters input via the switching fields (51), and the control program (4) adapts (180) the length of the movement sections (53a, 53b, 53c) and the respectively visualized process-determining process parameter to the respective inputs.

21. Method (100) according to Claim 19 or 20, comprising the further step of indexing (190) the switching fields (51) of the respective process-determining process parameters with the same colours as the corresponding movement sections (53a, 53b, 53c) where these are process-determining process parameters, wherein the movement curves (53) are divided into the different movement sections (53a, 53b, 53c) by means of different colours.

22. Method (100) according to Claims 19 to 21, comprising the further step of traversal (200) of the movement curves (53) of the parameter-time diagram (52) on the visualization device (5) correlated with the correspondingly moved image (54) of the components of the machine component in their respective positions at any time in the parameter-time diagram (52).

23. Method (100) according to Claims 19 to 22, comprising the further steps
- Calculating (210) a flow chart (6) for the entire production machine (1) from the movement curves (53) for the individual machine components (2); and
- Displaying (220) the flow chart (6) on the visualization device (5), preferably as a bar chart in separate rows assigned to the respective machine components (2).

24. Method (100) according to Claims 19 to 23, wherein the method (100) for optimizing the process parameters for the production machine (1) is performed by visualizing the machine components (2) in their function during production and inputting process parameters into the respective switching fields (51) outside the real operation of the production machine (1).

25. Data carrier (7) with a control program (4) stored thereon suitable for carrying out the method (100) according to any of Claims 19 to 24 or for controlling a production machine (1) according to any of Claims 1 to 18.

## Revendications

1. Machine de production (1) pour le traitement de matière plastique comprenant plusieurs composants de machine (2) et un élément de commande de machine (3) pour commander la machine de traitement de matière plastique (1) comprenant un programme de commande (4) avec une interface utilisateur interactive réalisée sous la forme d'un dispositif de visualisation (5), de préférence d'un écran tactile, dans lequel le programme de commande (3) est configuré pour visualiser sur le dispositif de visualisation (5) au moins un, de préférence tous, les composants de machine (2) dans leur fonctionnement lors de la production selon une représentation respective pour chacun de ces composants de machine et de mettre à disposition les champs de commande (51) correspondants pour la saisie des paramètres de processus relatifs au composant de machine (2) respectivement visualisé, **caractérisée en ce que** : la représentation comprend au moins un diagramme paramètre/temps (52) avec des courbes de mouvement (53) d'une ou plusieurs pièces détachées (21) respectives du composant de machine (2), au moins une des courbes de mouvement (53) étant subdivisée en différentes sections de mouvement (53a, 53b, 53c) visualisées de façon adaptée, pour lesquelles le paramètre de processus définissant le processus de cette section de mouvement (53a, 53b, 53c) est respectivement visualisé, ledit paramètre pouvant être modifié via les champs de commande (51) mis à disposition, la représentation étant de préférence réalisée sous la forme d'une représentation multiple comprenant en sus du diagramme paramètre/temps (52) une illustration (54) des pièces détachées de ce composant de machine corrélée aux courbes de mouvement.

2. Machine de production (1) selon la revendication 1,
**caractérisée en ce que** :
toutes les courbes de mouvement (53) du diagramme paramètre/temps (52) sont subdivisées en différentes sections de mouvement (53a, 53b, 53c) visualisées de façon adaptée.

3. Machine de production (1) selon la revendication 1 ou 2,
**caractérisée en ce que** :
les sections de mouvement (53a, 53b, 53c) possèdent une longueur dépendant des paramètres de processus saisis via les champs de commande (51), le programme de commande (4) adaptant la longueur des sections de mouvement (53a, 53b, 53c) et le paramètre de processus définissant le processus respectivement visualisé en fonction des saisies respectives.

4. Machine de production (1) selon l'une quelconque des revendications précédentes,
**caractérisée en ce que** :
les courbes de mouvement (53) sont subdivisées en différentes sections de mouvement (53a, 53b, 53c) au travers de différentes couleurs.

5. Machine de production (1) selon la revendication 4,
**caractérisée en ce que** :
les champs de commande (51) des paramètres de processus définissant respectivement le processus sont indexés avec les mêmes couleurs que les sections de mouvement (53a, 53b, 53c) correspondant pour lesquelles lesdits paramètres de processus définissent le processus.

6. Machine de production (1) selon la revendication 4 ou 5,
**caractérisée en ce que** :
en cas de saisie du paramètre de processus définissant le processus via le champ de commande (51) correspondant, la section de mouvement (53a, 53b, 53c) correspondante est mise en valeur sur la courbe de mouvement (53).

7. Machine de production (1) selon l'une quelconque des revendications précédentes,
**caractérisée en ce que** :
l'illustration (54) des pièces détachées du composant de machine est une illustration tridimensionnelle en perspective de la pièce détachée (21).

8. Machine de production (1) selon l'une quelconque des revendications précédentes,
**caractérisée en ce que** :
sur l'illustration (54) des pièces détachées du composant de machine, seules sont illustrées les pièces détachées (21) se déplaçant suivant les courbes de mouvement (53) du diagramme paramètre/temps (52).

9. Machine de production (1) selon l'une quelconque des revendications précédentes,
**caractérisée en ce que** :
l'illustration (54) des pièces détachées du composant de machine est disposée par le programme de commande (4) directement à côté du diagramme paramètre/temps (52) sur le dispositif de visualisation (5).

10. Machine de production (1) selon l'une quelconque des revendications précédentes,
**caractérisée en ce que** :
les champs de commande (51) permettant la saisie de paramètres de processus ayant une influence sur une courbe de mouvement (53) définie sont disposés par le programme de commande (4) séparément des autres champs de commande (51) ayant une influence sur les autres courbes de mouvement (53) sur le dispositif de visualisation (5).

11. Machine de production (1) selon la revendication 10,
**caractérisée en ce que** :
les champs de commande (51) ayant une influence sur des courbes de mouvement (53) définies sont disposés horizontalement à côté du diagramme paramètre/temps (52) dans une ou plusieurs zones sur le dispositif de visualisation (5) tandis que les champs de commande (51) ayant une influence générale sur les courbes de mouvement (53) sont disposés au-dessus et/ou en dessous du diagramme paramètre/temps (52) sur le dispositif de visualisation (5).

12. Machine de production (1) selon l'une quelconque des revendications précédentes,
**caractérisée en ce que** :
le programme de commande (4) met à disposition, pour chaque composant de machine (2) visualisé, un côté de visualisation (55) séparé sur le dispositif de visualisation (5), des champs de commande (51) adaptés permettant de passer d'un côté de visualisation (55) à un autre étant mis à disposition.

13. Machine de production (1) selon l'une quelconque des revendications précédentes,
**caractérisée en ce que** :
le programme de commande (4) permet de balayer les courbes de mouvement (53) du diagramme paramètre/temps (52) sur le dispositif de visualisation (5), le balayage étant corrélé à chaque instant avec l'illustration (54) déplacée de façon correspondante des pièces détachées du composant de machine dans leurs positions respectives sur le diagramme paramètre/temps (52).

14. Machine de production (1) selon la revendication 13,
**caractérisée en ce que** :
le programme de commande (4) est réalisé de telle sorte que le balayage puisse être interrompu et poursuivi à chaque instant de façon adaptée par l'utilisateur sur le diagramme paramètre/temps (52), l'illustration (54) déplacée des pièces détachées étant conservée dans la position obtenue à l'instant de l'interruption du balayage et se poursuivant de façon correspondante lorsque le balayage reprend à partir de cette position.

15. Machine de production (1) selon la revendication 14,
**caractérisée en ce que** :
le programme de commande (4) met à disposition sur le dispositif de visualisation (5) un curseur (56) permettant d'arrêter, de démarrer, d'avancer et de reculer le balayage du diagramme paramètre/temps (52) et/ou de le réaliser au ralenti ou au cours d'étapes individuelles avec une illustration (54) correspondante davantage corrélée des pièces détachées.

16. Machine de production (1) selon l'une quelconque des revendications précédentes,
**caractérisée en ce que** :
le programme de commande (4) est configuré pour calculer à partir des courbes de mouvement (53) pour les composants de machine (2) individuels un organigramme séquentiel (6) pour l'ensemble de la machine de production (1) et de le représenter sur le dispositif de visualisation (5), de préférence sous la forme d'un diagramme à barres dans lequel des lignes séparées sont associées aux composants de machine (2) respectifs.

17. Machine de production (1) selon l'une quelconque des revendications précédentes,
**caractérisée en ce que** :
le programme de commande (4) est configuré de façon à afficher sur au moins un des côtés de visualisation (55) séparés des touches de commutation (57) associées aux pièces détachées (21) individuelles du composant de machine (2) visualisé sur le côté de visualisation (55), lesdites touches permettant en option de pouvoir superposer, en sus de la représentation de la pièce détachée (21) associée à la touche de commutation (57) respective, une autre pièce détachée (21) sous la forme d'une courbe de mouvement (53) supplémentaire sur le diagramme paramètre/temps (52) et/ou sur l'illustration (54) des autres pièces détachées (54).

18. Machine de production (1) selon l'une quelconque des revendications précédentes,
**caractérisée en ce que** :
le programme de commande (4) est configuré de telle sorte que la visualisation des composants de machine (2) peut être réalisée pendant le fonctionnement en production et que la saisie de paramètres de processus peut être réalisée dans les champs de commande (51) respectifs hors fonctionnement réel de la machine de production (1).

19. Procédé (100) d'optimisation de paramètres de processus d'une machine de production (1) comprenant plusieurs composants de machine (2) et un élément de commande de machine (3) pour commander la machine de production (1) comprenant un programme de commande (4) avec une interface utilisateur interactive réalisée sous la forme d'un dispositif de visualisation (5), de préférence un écran tactile, comprenant les étapes configurées de la façon suivante :
- visualisation (110) d'au moins un, de préférence tous, les composants de machine (2) dans leur fonctionnement lors de la production selon une représentation multiple respective pour chacun de ces composants de machine (2) sur le dispositif de visualisation (5) et mise à disposition des champs de commande (51) correspondants pour la saisie des paramètres de processus relatifs au composant de machine (2) respectivement visualisé, au travers du programme de commande (4),
**caractérisée en ce que** :
la représentation multiple comprend au moins un diagramme paramètre/temps (52) avec des courbes de mouvement (53) d'une ou plusieurs pièces détachées (21) du composant de machine (2) respectif et une illustration (54) corrélée à lui des pièces détachées de ce composant de machine ;
- calcul (120) des courbes de mouvement sur la base des paramètres de processus saisis via les champs de commande (51) ou déjà présents dans le programme de commande (4) pour les composants de machine (2) respectifs au travers du programme de commande (4) ;
- division (130) d'au moins une des courbes de mouvement (53) en différentes sections de mouvement (53a, 53b, 53c) visualisées de façon adaptée par le biais du programme de commande (4) ;
- visualisation (140) du paramètre de processus définissant le processus pour la section de mouvement (53a, 53b, 53c) respective au travers du programme de commande (4) ;
- variation (150) des paramètres de processus au travers des champs de commande (51) sur la base des paramètres de processus définissant le processus visualisés pour les sections de mouvement (53a, 53b, 53c) respectives ;
- adaptation (160) des courbes de mouvement (53) correspondantes sur la base des paramètres de processus modifiés au travers du programme de commande (4) incluant la visualisation du paramètre de processus définissant le processus pour la section de mouvement (53a, 53b, 53c) respective au travers du programme de commande (4) ; et
- répétition (170) des étapes précédentes pour optimiser les paramètres de processus de la machine de production.

20. Procédé (100) selon la revendication 19, dans lequel les sections de mouvement (53a, 53b, 53c) possèdent une longueur dépendant des paramètres de processus saisis via les champs de commande (51) et le programme de commande (4) adapte la longueur des sections de mouvement (53a, 53b, 53c) et le paramètre de processus définissant le processus respectivement visualisé aux saisies respectives (180).

21. Procédé (100) selon la revendication 19 ou 20, comprenant l'étape supplémentaire d'indexation (190) des champs de commande (51) des paramètres de processus définissant respectivement le processus avec les mêmes couleurs que les sections de mouvement (53a, 53b, 53c) correspondantes dans lesquelles ces paramètres de processus sont définis, les courbes de mouvement (53) étant subdivisées en différentes sections de mouvement (53a, 53b, 53c) à l'aide de différentes couleurs.

22. Procédé (100) selon les revendications 19 à 21, comprenant l'étape supplémentaire de balayage (200) des courbes de mouvement (53) du diagramme paramètre/temps (52) sur le dispositif de visualisation (5) de façon corrélée à chaque instant avec l'illustration (54) déplacée de façon correspondante des pièces détachées du composant de machine dans ses positions respectives sur le diagramme paramètre/temps (52).

23. Procédé (100) selon les revendications 19 à 22, comprenant les étapes supplémentaires suivantes :
- calcul (210) d'un organigramme séquentiel (6) pour l'ensemble de la machine de production (1) à partir des courbes de mouvement (53) pour les composants de machine (2) individuels ; et
- représentation (220) de l'organigramme séquentiel (6) sur le dispositif de visualisation (5), de préférence sous la forme d'un diagramme à barres dans lequel des lignes séparées sont associées aux composants de machine (2) respectifs.

24. Procédé (100) selon les revendications 19 à 23, dans lequel le procédé (100) est mis en oeuvre pour optimiser les paramètres de processus de la machine de production (1) au travers de la visualisation des composants de machine (2) dans leur fonctionnement en production et de la saisie de paramètres de processus dans les champs de commande (51) respectifs hors fonctionnement réel de la machine de production (1).

25. Support de données (7) avec un programme de commande (4) mémorisé dessus adapté au mode de réalisation du procédé (100) selon l'une quelconque des revendications 19 à 24 ou pour commander une machine de production (1) selon l'une quelconque des revendications 1 à 18.
